# EUROPEAN PATENT APPLICATION

(11) **EP 1 944 351 A1**
(43) Date of publication of application: **16.07.2008**
(21) Application number: 07075033.6
(22) Date of filing: 12.01.2007
(51) Int. Cl.: C09K 21/12, D21H 17/00

(54) **Compositions useful as fire-retardant**

(71) Applicant: Nederlandse Organisatie voor Toegepast-Natuurwetenschappelijk Onderzoek TNO, 2628 VK Delft (NL)
(72) Inventor: Sailer, Michael Fritz, 2641 VE Pijnacker (NL)
(74) Representative: van Loon, C.J.J.

(57) **Abstract**

The invention relates to compositions that are useful as fire-retardant, in particular as fire-retardants for the impregnation of lignocellulosic based materials, such as honeycomb structures made of (recycled) paper that are frequently applied in doors, walls, furniture and the like.

In accordance with the invention a fire retardant composition is provided comprising a combination of an oligomeric or monomeric phosphate ester and a silica sol-gel.

## Description

The invention relates to compositions that are useful as fire-retardant, in particular as fire-retardant for the impregnation of lignocellulosic based materials, such as honeycomb structures made of (recycled) paper that are frequently applied in doors, walls, furniture and the like.

Honeycomb paper is applied as intermediate ("sandwich") layers having a low specific mass in various types of constructions. These honeycomb structures are employed to impart compression strength to these constructions and are light-weight and relatively low in price. In order to improve the strength and fire retardant properties the honeycomb paper is frequently impregnated with phenolic resin. Subsequently the impregnated paper is cured at high temperatures. In this process formaldehyde is emitted which is a harmful compound and must be avoided, especially in indoor applications. After curing, the honeycomb structures maintain their stiffness, which presents another drawback. Because of this bulkiness, large transport volumes are required. Other drawbacks are that the honeycomb material is susceptible to biological degradation (*e.g*. by moulds) and loses its pressure strengths if it comes into contact with water.

More in general, construction materials such as the above-mentioned honeycomb structures should fulfill a number of requirements, including suitable (wet) pressure strength, sufficiently low equilibrium water content and it should be easy processable using adhesives. Also the mechanical and microbiological durability and fire resistance should be sufficient. It is often challenging to balance all these requirements, since at least some of them are conflicting.

It is an object of the present invention to provide fire retardant compositions for the impregnation of lignocellulosic materials that do not suffer from the above-mentioned drawbacks and/or wherein the desired properties can be better controlled. In particular it is an object of the present invention to provide materials that provide excellent fire-retardant properties, while at the same time conserving all other requirements and where the transport volume of structures produced is minimized.

It was found that this object can be met, at least in part, by a combination of phosphorus based fire retardants and silica sol-gel. Thus, in a first aspect, the present invention is directed to a fire retardant composition comprising phosphorus containing fire retardants and a silica sol-gel. The phosphorus based fire retardant used in the present invention is preferably a phosphate ester and more preferably an oligomeric phosphate ester.

The fire retardant composition of the present invention can be used to impregnate paper in order to create honeycomb structures. The structures thus obtained show excellent properties with respect to water resistance, fire retardant properties, compressibility and durability. At the same time, the product can still be combined with water glass in the conventional method of lamination.

The impregnation can be carried out in a continuous fashion by using a conventional paper treatment process, *e.g.* by submerging a continuous belt of lignocellulosic material (paper) through a bath containing the fire retardant and the sol-gel composition. The impregnated paper maintains its flexibility in the length direction, by which it can be stored and transported without requiring much space, due to its compactness. The structures that are thus produced have dimensions that are "endless", *viz.* up to *e.g.* 50 m or more. Also no emission of harmful compounds occurs during the production process. If a silica sol-gel comprising ethanol is used, the solvent can be collected as vapor and recycled.

The phosphate esters that find use in the present invention are commercially known fire-retardants. Suitable (oligomeric or monomeric) phosphate esters may be represented by the following formula I: 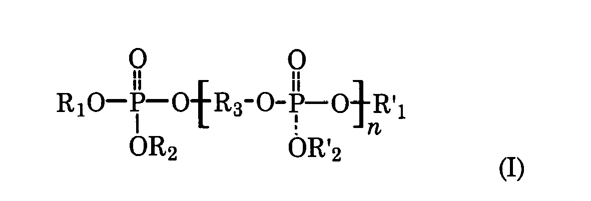 wherein each of R₁, R'₁, R₂, R'₂ and R₃ is independently hydrogen or hydrocarbon side chain, in particular straight, branched or cyclic C₁-C₁₀ alkyl or alkenyl (preferably C₂-C₈ alkyl or alkenyl), optionally substituted, e.g. with halogen, epoxide hydroxyl, amino; and n is an integer from 0 to typically about 10. In case n is zero, the compounds of formula I are monomeric phosphate esters. Examples of suitable oligomeric phosphate ester compounds and their production are given e.g. in US-A-3 767 732 and US-A-4 382 042.

Preferred compounds are those of formula I having R₁ and/or R'₁= (substituted) phenyl, hydrogen, methyl, ethyl, propyl, butyl or pentyl; R₂ and/or R'₂ = (substituted) phenyl, methyl, ethyl, propyl, butyl or pentyl; and R₃= (substituted) phenyl, bisphenol A or biphenyl. A suitable monomeric compound is triphenyl phosphate, which corresponds to a compound of Formula I having R₁=R₁'=R₂=phenyl and *n*=0. A suitable oligomeric phosphate ester is resorcinol bis(diphenyl phosphate) (RDP), commercially available as Fyrolflex^{™} RDP (Akzo Nobel), which corresponds to a compound of formula I having R₁=R₁'=R₂=R₂'=R₃=phenyl and n=1.

The silica sol-gel component is typically based on silicon alkoxide, Si(OR)₄, wherein R is an alkyl, preferably methyl or ethyl. These compounds can be subjected to hydrolysis and gelation, whereby silane groups (Si-OH) and siloxane groups (Si-O-Si) are broken and formed, respectively. Commercially widely available sol-gel components are TEOS (tetraethylorthosilicate) and TMOS (tetramethylorthosilicate).

The composition of the invention typically comprises 1 to 90 wt.% oligomeric phosphate ester, preferably from 5 to 50 wt.%, based on weight of the total composition.

The amount of silica sol-gel component is typically from 1 to 25 wt.%, preferably from 5 to 20 wt.% of the total composition. If a ready-to-use sol-gel composition is used, *e.g.* a commercially obtainable composition, such as Sebosil^{™}, the silica content of the composition of the present invention typically ranges from 1-10% silica and the solvent (typically ethanol) content typically ranges from 10-70%.

The composition of the present invention may further comprise suitable solvents, such as ethanol, isopropanol or other alcohols, acetone or other ketones.

The compositions of the present invention are prepared by admixing the ingredients in any order. Preferably, the (oligomeric) phosphate esters are mixed into the sol-gel composition.

In a preferred embodiment a boric acid derivative is present in the compositions of the present invention, in particular those described in DE-A-198 33 479. It was found that the addition of these boric acid compounds has a positive effect on the durability of the lignocellulosic products that are impregnated with the compositions of the present invention. Suitable boric acid derivatives for this purpose are boric acid, trialkylborate (*e*.*g.* tributyl borate; tri-isopropyl borate; or tri-tert-butyl borate). The boric acid derivatives may be present in amounts of typically 0 to 10 wt.%, preferably 0.5 to 5 wt.%, based on weight of the total composition. The boric acid provides further protection against biological degradation (that may be caused by degrading organisms like fungi and insects) and has positive effects on the fire resistance.

It was found that the leaching of the boric acid that commonly occurs can be reduced by using the SiO₂ in accordance with the present invention.

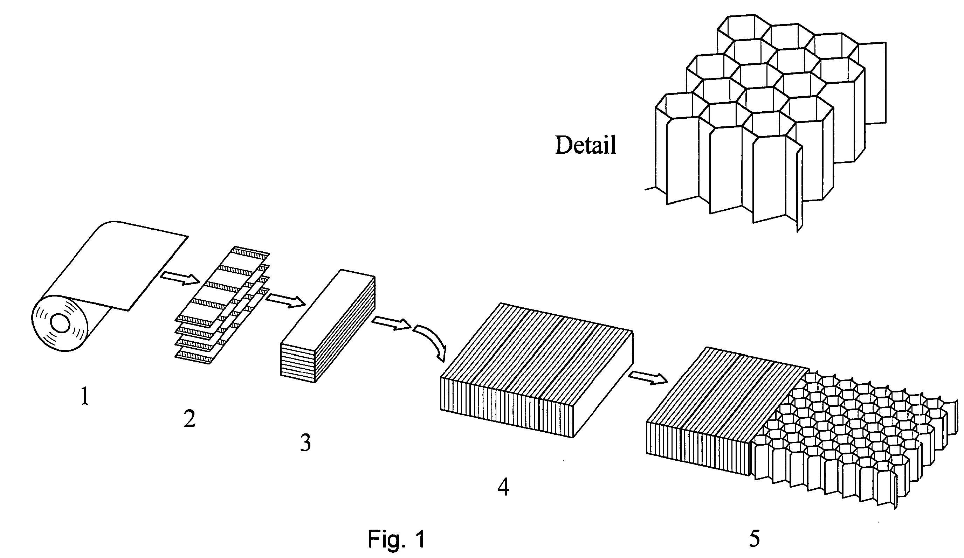

Honeycomb structures can be prepared by known process, *e.g.* the paper honeycomb production processes described in Pflug et al. (5th Global Wood and Natural Fibre Composites Symposium, Kassel (DE), 27-28 April 2004) typically out of low cost recycled paper (*e.g.* Testliner). Figure 1 shows schematically the different process steps in a suitable production process for expanded honeycombs. In a first step adhesive lines are printed on the paper, which may come from one or several paper rolls (1). Then a stack of several sheets is made and bonded together (2). Those sheets can be cut to strips prior or after stacking to a slice (3). In the third step many slices are stacked and bonded together to produce an unexpanded endless paper honeycomb core (4). Finally, the sheets are pulled apart (5) expanding the stack into a hexagonal honeycomb core (6). The residual stresses in paper honeycombs can be relaxed after expansion by a controlled application of heat.

Typically the structures that are produced in this way comprise walls formed of paper strips having a width of several cm, *e.g*. about 1-6 cm, that are. A typical honeycomb structure is has a diameter of the cells of *e.g.* 5 - 50 mm and a thickness of the total honeycomb layer of *e.g.* 5 - 60 mm. The paper weight is usually between 80 g/m² and 250 g/m²

The invention will now be illustrated by the following examples.

### Example 1

Paper that is used to make honeycomb structures using the above-mentioned process described by Pflug *et al.* was impregnated with three different compositions according to the present invention (silica in combination with oligomeric phosphate ester compounds (RDP) and boric acid). Drying tests were carried out using these impregnated papers, in which the papers were dried at 40 °C. Table 1 shows the results. Sebosil^{™}, a SiO₂ "nano-sol" in ethanol solution, containing 5-20 % SiO₂ and 70-80 % ethanol was used as a silica source.

**Table 1: Relative mass of the treated paper after drying at 40 °C (the weight at t=0 min is set at 100%).**

| | **Drying time in [min]** | | | | |
|---|---|---|---|---|---|
| **Concentration** | 0 | 5 | 15 | 30 | 120 |
| 4% silica, 80% RDP, 16% solvent | 100,0 | 78,8 | 68,6 | 54,6 | 33,1 |
| 10% silica, 50% RDP, 40% solvent | 100,0 | 72,2 | 54,3 | 41,7 | 17,6 |
| 15% silica, 20% RDP,65% solvent | 100,00 | 50,64 | 23,64 | 18,24 | 10,77 |

From these results, it follows that the drying efficiency is improved, in particular when the silica content is 15% or higher. A short drying time is advantageous in the industrial application.

Also the improvement in strength, durability, water repellence and fire resistance was measured.

No significant change in process and transport properties was found (gluing and compression for transport).

Addition of boric acid to the mixture of 15% silica, 20% RDP and 65% solvent provided the following results: an increase of strength by 15%, an increase of the durability of 50%, and an improvement of the water repellence by 30%. The treatment resulted in good flame retardant properties.

### Example 2

The flame retardant properties of the compositions of the present invention are demonstrated by fire tests on impregnated paper.

A small piece of paper (8 × 1 cm²) was kept horizontally and ignited at the end. The length of the paper that was burned and the time needed to burn were recorded and are listed in Table 2.

Four tests were performed. One a control; a sample only impregnated with the sol-gel composition; and two samples containing resorcinol bis diphenylphosphate (RDP) and triphenylphosphate (TPP).

**Table 2: Burning properties of impregnated paper with silica, TPP and RDP.**

| Composition | Weight % silica | Weight % Phosphate compound | Burning distance (cm) | Burning time (s) |
|---|---|---|---|---|
| Control | 0 | 0 | 8 | 30 |
| Sol-Gel | 15 | 0 | 8 | 30 |
| **TPP** | 15 | 6 | 3 | 10 |
| | 15 | 12 | 2 | 5 |
| **RDP** | 15 | 6 | 1 | 10 |
| | 15 | 12 | 0.5 | 5 |

These results clearly demonstrate the fire retardant quality of the compositions of the present invention.

## Claims

1. Fire retardant composition comprising a phosphate ester and a silica sol-gel.

2. Fire retardant composition according to claim 1, wherein the phosphate ester is an oligomeric phosphate ester.

3. Fire retardant composition according to any of the previous claims, wherein the phosphate esters is a compound of formula I: 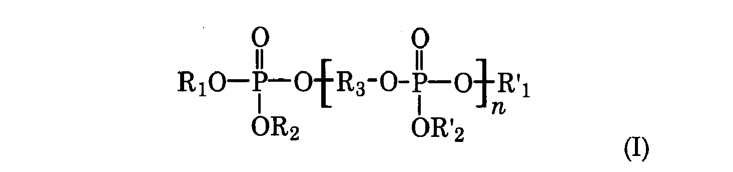 wherein each of R₁, R'₁, R₂, R'₂ and R₃ is independently selected from hydrogen and straight, branched or cyclic hydrocarbon side chain; and n is an integer from 0 to about 10.

4. Fire retardant composition according to any of the previous claims, comprising 5 to 90 wt.% oligomeric phosphate ester and 2 to 25 wt.% silica sol-gel.

5. Fire retardant composition according to any of the previous claims, further comprising boric acid derivative.

6. Fire retardant composition according to claim 5, wherein said boric acid derivative is selected from boric acid, trialkylborate (preferably tributyl borate; tri-isopropyl borate; or tri-tert-butyl borate) and combinations thereof.

7. Fire retardant composition according to claim 5 or 6, wherein said boric acid derivative is present in an amount of 1 to 5 wt.%, based on the total weight of the composition.

8. Use of a composition as defined in any of the previous claims as a fire retardant.

9. Use of a composition as defined in any of the claim 1-7 for improving the compression strength, equilibrium water content, adhesive processablity, mechanical and/or microbiological durability of lignocellulosic materials.

10. Lignocellulosic structure impregnated with a composition according to any of the claims 1-7.

11. Lignocellulosic structure according to claim 10, having a longest dimension of more than 50 m.

12. Lignocellulosic structure according to claim 10 or 11, comprising a honeycomb structure, having cells measuring 5-50 mm, wherein the thickness of the total honeycomb layer is 5 - 60 mm.
